# EUROPEAN PATENT SPECIFICATION

(11) **EP 0 354 070 B1**
(45) Date of publication and mention of the grant of the patent: **17.03.1993**
(21) Application number: 89308018.4
(22) Date of filing: 07.08.1989
(51) Int. Cl.: G11B 7/24, G11B 7/00

(54) **Optical recording medium and the method of recording, reading, and erasing information using it**
Optischer Aufzeichnungsträger und Verfahren zum Schreiben, Lesen und Löschen einer Information in diesem Träger
Support d'enregistrement optique et méthode d'enregistrement, de lecture et d'effacement d'information l'utilisant

(30) Priority: 05.08.1988 JP 196372/88
(43) Date of publication of application: 07.02.1990
(73) Proprietor: SHARP KABUSHIKI KAISHA, Osaka 545 (JP)
(72) Inventor: Van, Kazuo, Nara-shi Nara-ken (JP); Katayama, Hiroyuki, Nara-shi Nara-ken (JP); Takahashi, Akira, Nara-shi Nara-ken (JP); Ohta, Kenji, Nara-ken (JP)
(74) Representative: Brown, Kenneth Richard

(56) References cited:
- EP-A- 0 193 931
- TECHNISCHE RUNDSCHAU. vol. 79, no. 26, 26 June 1987, BERN CH,pages 70 - 77; Günther Kämpf: "Optische Datenspeicher in der Informationstechnik"
- PATENT ABSTRACTS OF JAPAN vol. 12, no. 175 (P-707)(3022) 25 May 1988
- PATENT ABSTRACTS OF JAPAN vol. 12, no. 6 (P-653)(2853) 09 January 1988

## Description

This invention relates to an optical recording medium which includes a recording medium layer in which information can be recorded by applying a light beam so as to alter selectively the light absorption spectrum of portions of the recording medium layer.

The invention also relates to a method of recording, reading and erasing information on such a recording medium.

Recently, as a result of the achievement of high density and large capacity, the demand for optical recording media has tended to grow significantly year by year. Optical recording media can be classified into three types: 'read-only', 'write-once' and 're-writable'.

Information can be recorded on a 'write-once' type medium by a process consisting essentially of the projection of a laser beam onto the recording layer to produce fusion or decomposition of the beam-projected spot by which geometric pits are formed in the portions of the recording layer exposed to the beam.

Information can also be recorded on a 'write-once' type medium by a process consisting essentially of the projection of a laser beam onto the recording layer to vary the optical characteristics, such as the index of reflection, of the beam-projected spot by which crystalline or non-crystalline conditions occur in the portions of the recording layer exposed to the beam.

Known 're-writable' optical recording media include those in which information is recorded by making use of a magneto-optical effect or a phase transition effect in the recording layer. In the magneto-optical type recording media information is recorded as described below. First, a laser beam is projected onto a recording layer comprising a film which is magnetised in a direction perpendicular to the layer surface. Next, by applying a magnetic field from an external source, the magnetised direction of the beam-projected portions of the film is inverted, compared with that of the unexposed portions, where the beam-projected portion is heated above the Curie temperature.

In the phase-transition type recording media information is recorded as described below. A laser beam is projected onto the recording layer so that the phase of the beam-projected portion of the recording layer is converted into a crystalline condition from an initial non-crystalline condition, or vice versa.

Note that the methods mentioned above for 're-writable' recording of information in optical recording media use the laser beam as a heat source. Thus, these media use "heat-mode" recording systems.

Recently, independently of the "heat-mode" recording systems, research and development has been made into optical recording media using the so-called "photon-mode" recording systems. As a typical example of the use of a "photon-mode" recording system, an optical recording medium using an organic compound presenting the photochromic phenomenon is known. For example, see Japanese Patent Publication No. 62-165751 (1987), in which information is recorded on a multiplex basis in a recording medium which comprises a plurality of monomolecular films containing organic colouring matter by projecting laser beams having different wavelengths or different degrees of polarisation.

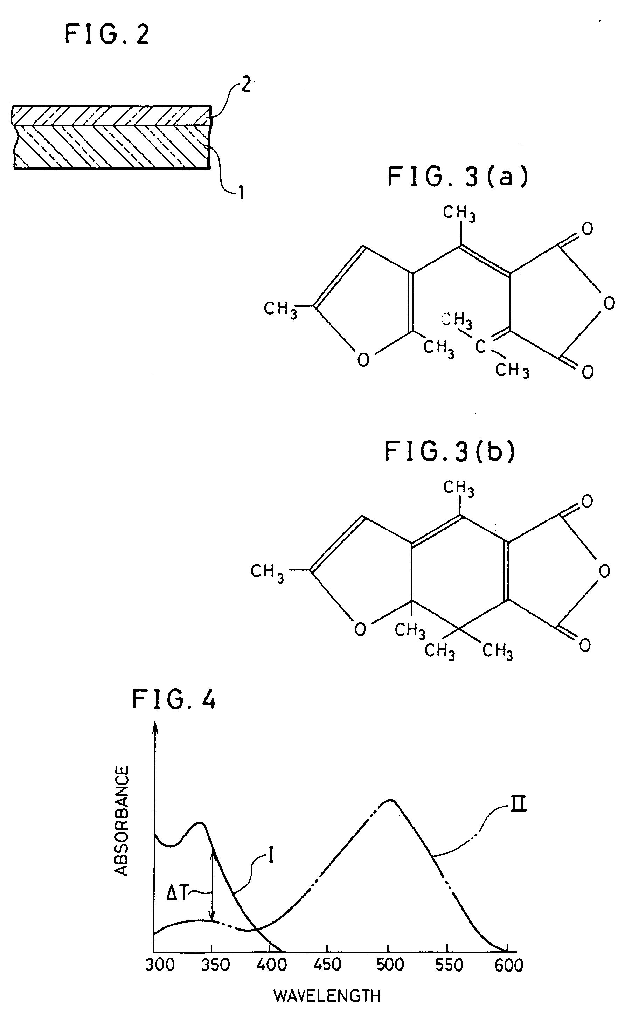

The photochromic phenomenon is the phenomenon in which a certain solid or liquid material reversibly varies in colour in dependence upon incident light. There are a wide variety of organic compounds which present a photochromic phenomenon. Such compounds include, for example, hydrazone, osazone, stilbene, salicylaldehyde, spiropyrane, fulgide, azobenzene, and derivatives of these. Of these organic compounds, a typical example of an optical recording medium which uses a recording layer composed of fulgide is cited below. By projection of ultraviolet rays having a wavelength of about 340nm and visible rays, fulgide reversibly undergoes intramolecular ring closure, as shown in Fig. 3(b), from the intramolecular ring open structure shown in Fig. 3(a). As a result, as is well-known, variation of the absorption spectrum shown by the solid line I and the assumptive line II in Fig. 4 reversibly occurs.

For example, the absorption spectrum shown by solid line I in Fig. 4 is initially caused by preliminarily projecting visible rays onto fulgide. Recording is executed by projecting a recording beam having a wavelength of about 340nm on the recording layer. The portion of the recording layer exposed to the recording beam varies into the state indicated by the absorption spectrum shown by the assumptive line II in Fig. 4. As a result, for example, when this portion is subjected to the projection of a weak beam having a wavelength of about 350nm, i.e. close to the wavelength of the recording beam, a certain difference in absorbance shown by ΔT in Fig. 4 is produced between the portion subjected to the recording beam and the portion free from the beam projection. Thus, by the detection of this difference in absorbance, a recorded signal can be read.

On the other hand, in order to erase the recorded signal, the absorption spectrum shown by solid line I in Fig. 4 restores itself as a result of the projection of a beam of visible light, i.e. having a wavelength of about 500nm, onto the portion previously subjected to the recording beam. As mentioned above, since the photochromic phenomenon is reversibly presented, the fulgide recording layer can be used for an erasable optical recording medium.

In the manner mentioned above, recording information in the optical recording medium making use of a photochromic phenomenon is implemented by projecting laser beams onto the recording medium. The spot diameter of beams focused by the optical lens is constrained by diffraction effects. Actually, the spot diameter of visible rays or near-infrared rays is confined to about one µm When executing digital recording in which one-bit of information is recorded in the beam-spot region, all of these conventional optical recording media are capable only of achieving a maximum recording density of 10⁸ bit/cm². As a result, there are limitations on the recording density which can be provided by these conventional optical recording media.

An optical recording medium is known from EP-A-0,193,931 in which the recording medium comprises layers of at least two photochromic dyes capable of forming J-aggregates. Prior to recording, the colourless dyes are first converted into differently coloured J-aggregates by a two-stage initialisation process, applied to the whole medium, which involves exposure to UV radiation, followed by heat treatment using IR radiation. Recording can then be made by 'bleaching' portions of each layer of the recording medium by exposure to a beam of wavelength corresponding to the peak of the particular absorption spectrum for the dye in that layer. In this way, at each beam-exposed spot of the recording medium, one bit of data can be recorded in each dye layer. Thus, a greater recording density is achieved. Recorded data can be erased by repeating the initialising heat-treatment process to restore colour to the bleached portions of the recording medium. However, this optical recording medium has two disadvantages. First, the initialisation/erasure process requires careful heat treatment for the formation of J-aggregates. Second, the erasure process inherently erases all recorded data; thus, it is not possible to erase recorded data selectively, for example in one only of the dye layers.

In order to more densely record information using a photon-mode recording system, research and development has also recently been directed to newer optical recording media making use of a photochemical hole burning phenomenon. Nevertheless, at present, there are still a variety of technical problems to solve before such media will be suitable for practical use.

In accordance with a first aspect of the invention, in an optical recording medium which includes a recording medium layer in which information can be recorded by applying a light beam so as to alter selectively the light absorption spectrum of portions of the recording medium layer, the recording medium layer includes at least two organic compounds which exhibit different sets of photochromic characteristics so as to permit recording and reading of information independently in respect of each compound, and is characterised in that the organic compounds are dispersed in an optically transparent binder and in that the photochromic characteristics of each compound are reversibly changeable on exposure to beams having wavelengths different to those applied to any other of said compounds so as to permit erasure of information independently in respect of each compound.

The recording medium layer may include at least two kinds of organic compounds such as hydrazone, osazone, stilbene, salicylaldehyde, spiropyrane, fulgide, azobenzene, and derivatives of these, dispersed in the binder.

The recording medium layer may include thioindigo and pyrene thioindigo dispersed in the binder.

The binder may be made of acrylic polymer or polyvinyl chloride polymer or an inorganic compound such as water glass.

The optical recording medium may further comprise a substrate made of glass or plastic on which the recording medium layer is formed.

The substrate mentioned above may comprise geometric pattern such as grooves etc. on the surface thereof.

The above recording medium may comprise a reflection film disposed on the opposite surface of said recording medium layer (2) to said substrate (1).

The above recording medium may comprise protective films by which the recording medium is disposed therebetween, whereby the recording medium can be protected from high temperature and humidity.

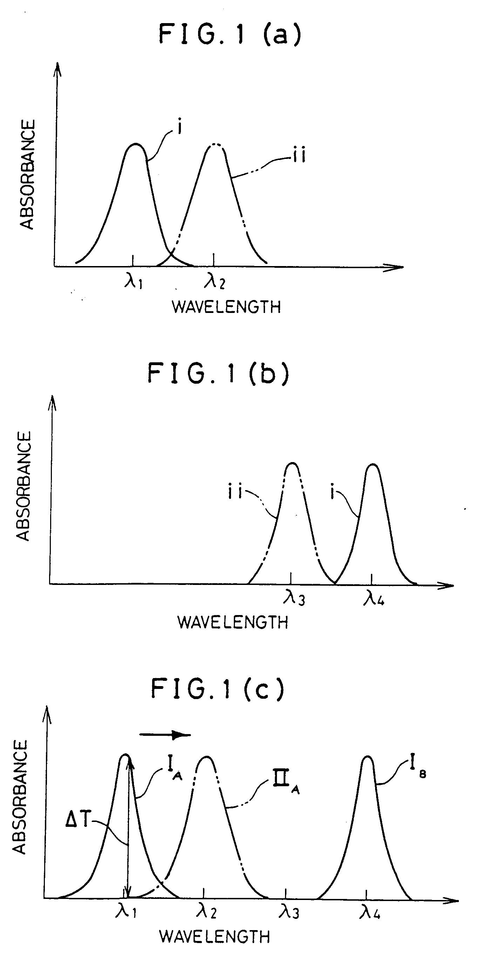

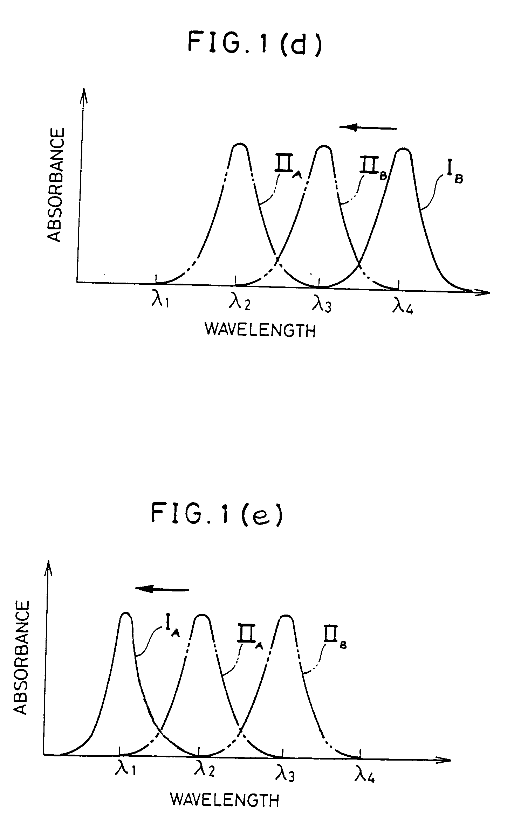

In accordance with a second aspect of the invention, there is provided a method of recording, reading and erasing information on an optical recording medium having a recording medium layer in which information can be recorded by applying a light beam so as to alter selectively the light absorption spectrum of portions of the recording medium layer, the layer including at least two photochromic organic compounds (A, B) dispersed in an optically transparent binder, each compound exhibiting optical characteristics (I_{A}, II_{A}; I_{B}, II_{B}) which are changeable on exposure to beams having wavelengths (λ₁, λ₂; λ₄, λ₃) different to those applied to the other compound or compounds so as to permit recording, reading and erasing of information independently in respect of each compound, the optical characteristics of each said compound being reversibly variable between those of a respective first absorption spectrum (I_{A}, I_{B}) and those of a respective second absorption spectrum (II_{A}, II_{B}), the method comprising the following steps:
an initialising step of projecting beams having wavelengths (λ₂, λ₃) corresponding substantially to the respective peaks of the second absorption spectra (II_{A}, II_{B}) of said compounds so that each compound exhibits its respective first absorption spectrum (I_{A}, I_{B});
a recording step of projecting beams having wavelengths (λ₁, λ₄) corresponding substantially to the respective peaks of the first absorption spectra (I_{A}, I_{B}) of said compounds in dependence upon information to be recorded, so that, in portions of the recording medium layer exposed to one or more of said beams, compounds (A - Fig. 1(c); B - Fig. 1(d)) associated with those beams revert to their respective second absorption spectra (II_{A}, II_{B});
a reading step of projecting beams having wavelengths close to, and intensity lower than, the beams used in the recording step, and of extracting recorded information by detecting change (ΔT) in the absorption of each beam which occurs between recorded and non-recorded portions of the recording medium layer; and
an erasing step for erasing information, which has been recorded by changing the optical characteristics of one or more of said compounds (A), by projecting beams having wavelengths (λ₂ - Fig. 1(e)) corresponding substantially to the respective peaks of the second absorption spectra (II_{A}) of said one or more compounds.

Figs. 1 and 2 relate to an embodiment of the present invention, wherein:
Fig. 1(a) is a graphical chart illustrating an absorption spectrum of an organic compound A in a recording medium of an optical recording medium;
Fig. 1(b) is a graphical chart illustrating an absorption spectrum of an organic compound B in a recording medium of an optical recording medium;
Figs. 1(c), (d) and (e) are graphical charts illustrating whole absorption spectra of a recording medium layer comprising compounds A and B; and
Fig. 2 is a sectional view of an optical recording medium.
Figs. 3 and 4 relate to a recording medium of a conventional optical recording medium, wherein:
Fig. 3(a) is a structural formula illustrating a condition of ring open of fulgide used in the recording medium layer of a conventional optical recording medium;
Fig. 3(b) is a structural formula illustrating a condition of ring closure of fulgide used in the recording medium layer of a conventional optical recording medium; and
Fig. 4 is a graphical chart illustrating a variation of the absorption spectrum produced by fulgide in accordance with the conditions shown in Figs. 3(a) and (b).

Referring now to Figures 1 and 2, an embodiment of an optical recording medium in accordance with the present invention and the method of its use will now be described and explained.

As shown in Fig. 2, an optical recording medium comprises a substrate 1 of glass or plastic and a recording medium 2 formed as a layer on the substrate 1. The recording medium 2 has a composition in which at least two kinds of a variety of organic compounds exhibiting different sets of photochromic characteristics are dispersed in an optically transparent binder. Suitable kinds of organic compounds include hydrazone, osazone, stilbene, salicylaladehyde, spiropyrane, fulgide, azobenzene and derivatives of these.

The binder can hold at least two kinds of such organic compounds in a dispersed condition, and yet, such binder is acceptable for use. For example, acrylic polymer or polyvinyl chloride polymer or an inorganic material such as water glass may be used for the binder.

The following description refers to an example in which the recording medium layer 2 contains two kinds of organic compounds A and B, each presenting a photochromic phenomenon in the condition where they are dispersed in the binder.

The example will be described with reference to the following conditions. That is, as shown in Fig. 1(a), organic compound A presents a photochromic phenomenon on exposure to beams having wavelengths λ1 and λ2, where the absorption spectrum thereof reversibly varies between the condition indicated by the solid line i and the other condition indicated by the assumptive line ii. On the other hand, as shown in Fig. 1(b), organic compound B presents a photochromic phenomenon on exposure to beams having wavelengths λ3 and λ4, where the absorption spectrum thereof reversibly varies between the conditions indicated by the solid line i and the assumptive line ii. The embodiment adopts such organic compounds A and B which respectively have the recording and erasing wavelengths λ1 through λ4 used for recording and erasing information on and from the organic compounds A and B in the recording layer. The wavelengths λ1 to λ4 have the relationship λ1 < λ2 < λ3 < λ4 therebetween.

In order to record information in the recording medium, first the recording medium is exposed to the sequential projection of beams having wavelengths λ2 and λ3 during an initial stage, and then the absorption spectrum indicated by the solid lines I_{A} and I_{B} in Fig. 1(c) is preserved in the recording medium.

Then, when projecting a recording beam having wavelength λ1 onto the recording medium, only the organic compound A in the recording medium undergoes a photochemical reaction, so that the absorption spectrum of the recording medium changes into that shown by the assumptive line II_{A} and the solid line I_{B} in Fig. 1(c). When projecting a beam having lower intensity than that of the recording beam and wavelength close to λ1 in the above condition, there occurs, the difference in absorbance ΔT between the absorption spectra before and after the recording with the recording beam having wavelength λ1, whereby information recorded using wavelength λ1 can be detected.

Next, when projecting a recording beam having wavelength λ4 onto the recording medium in the condition where the organic compound A has the absorption spectrum shown by the assumptive line II_{A} in Fig. 1(c), only the organic compound B undergoes a photochemical reaction, so that the absorption spectrum of the recording medium changes into that shown by the assumptive lines II_{A} and II_{B} in Fig. 1(d). When projecting a beam having lower intensity than that of the recording beam and wavelength close to λ4 in the above condition, there occurs the difference in absorbance between the absorption spectra before and after the recording with the recording beam having wavelength λ4, whereby information recorded using wavelength λ4 can be detected. In this way, recordings with wavelengths λ1 and λ4 are independently executed without adversely affecting the content of any previous recordings done with the other wavelength.

For example, in order to erase information recorded by the recording beam having wavelength λ1, in the condition where the organic compound A has the absorption spectrum shown by the assumptive line II_{A} in Fig. 1(d), when a beam having wavelength λ2 is projected onto the recording medium, the absorption spectrum of the recording medium is changed to the condition shown by the lines I_{A} and II_{B} of Fig. 1(e). In this way, irrespective of the previous recording done by applying other wavelengths, additional recording using wavelengths λ1 and λ4 can be respectively executed independently. Furthermore, erasure of the recorded information by applying respective wavelengths λ1 and λ4 can be executed independently without adversely affecting the content of information recorded by applying other wavelengths. Accordingly, the optical recording medium according to the present embodiment provides an information recording capacity which is doubled in comparison with that of any conventional optical recording medium which uses a single organic compound.

As a typical embodiment of the combination of organic compounds A and B, it is suggested to use thioindigo (having a wavelength λ1 of about 490nm and a wavelength λ2 of about 540nm) and pyrene thioindigo (having a wavelength λ3 of about 580nm and a wavelength λ4 of about 720nm). However, a wide variety of other combinations of organic compounds A and B may also be used, which exhibit different sets of photochromic characteristics which are reversibly changeable on exposure to beams of different wavelengths.

The above embodiment uses two kinds of organic compounds dispersed in the binder. However, it will be appreciated that the invention also allows the combination of three or more kinds of organic compounds provided that multiplex recording can be executed based on the principles described above.

By virtue of those features mentioned above, making use of a photochromic phenomenon, recording, reading and erasure of information can be executed independently in respect of the individual organic compounds dispersed in the recording medium. As a result, the optical recording medium according to the present invention significantly promotes information recording density in proportion to the number of organic compounds in the recording layer.

The invention being thus described, it will be obvious that the same may be varied in many ways.

## Claims

1. An optical recording medium which includes a recording medium layer (2) in which information can be recorded by applying a light beam so as to alter selectively the light absorption spectrum of portions of the recording medium layer, said layer including at least two organic compounds which exhibit different sets of photochromic characteristics so as to permit recording.and reading of information independently in respect of each compound, characterised in that said organic compounds are dispersed in an optically transparent binder and in that the photochromic characteristics of each compound are reversibly changeable on exposure to beams having wavelengths different to those applied to any other of said compounds so as to permit erasure of information independently in respect of each compound.

2. An optical recording medium according to claim 1, wherein at least two kinds of organic compounds such as hydrazone, osazone, stilbene, salicylaldehyde, spiropyrane, fulgide, azobenzene, and derivatives of these, are dispersed in said binder.

3. An optical recording medium according to claim 1, wherein thioindigo and pyrene thioindigo are dispersed in said binder.

4. An optical recording medium according to any one of claims 1 to 3, wherein said binder is composed of acrylic polymer or polyvinyl chloride polymer or an inorganic compound such as water glass.

5. An optical recording medium according to any one of claims 1 to 4, wherein the absorption spectrum of each said compound reversibly varies on exposure to a beam having a wavelength which does not affect the absorption spectrum of any other of said compounds.

6. An optical recording medium according to any one of claims 1 to 5, wherein the colour of each said compound reversibly varies on exposure to a beam having a wavelength which does not affect the colour of any other of said compounds.

7. An optical recording medium according to any one of the preceding claims, further comprising a substrate (1) made of glass or plastic on which said recording medium layer (2) is formed.

8. An optical recording medium according to claim 7, wherein said substrate (1) is patterned to provide a geometric pattern such as grooves on a surface thereof.

9. An optical recording medium according to claim 7 or claim 8, further comprising a reflection film disposed on the opposite surface of said recording medium layer (2) to said substrate (1).

10. An optical recording medium according to any one of claims 7 to 9, wherein the recording medium layer (2) is disposed between protective films.

11. A method of recording, reading and erasing information on an optical recording medium having a recording medium layer in which information can be recorded by applying a light beam so as to alter selectively the light absorption spectrum of portions of the recording medium layer, the layer including at least two photochromic organic compounds (A, B) dispersed in an optically transparent binder, each compound exhibiting optical characteristics (I_{A}, II_{A}; I_{B}, II_{B}) which are changeable on exposure to beams having wavelengths (λ₁, λ₂; λ₄, λ₃) different to those applied to the other compound or compounds so as to permit recording, reading and erasing of information independently in respect of each compound, the optical characteristics of each said compound being reversibly variable between those of a respective first absorption spectrum (I_{A}, I_{B}) and those of a respective second absorption spectrum (II_{A}, II_{B}), the method comprising the following steps:
an initialising step of projecting beams having wavelengths (λ₂, λ₃) corresponding substantially to the respective peaks of the second absorption spectra (II_{A}, II_{B}) of said compounds so that each compound exhibits its respective first absorption spectrum (I_{A}, I_{B});
a recording step of projecting beams having wavelengths (λ₁, λ₄) corresponding substantially to the respective peaks of the first absorption spectra (I_{A}, I_{B}) of said compounds in dependence upon information to be recorded, so that, in portions of the recording medium layer exposed to one or more of said beams, compounds (A - Fig. 1(c); B - Fig. 1(d)) associated with those beams revert to their respective second absorption spectra (II_{A}, II_{B});
a reading step of projecting beams having wavelengths close to, and intensity lower than, the beams used in the recording step, and of extracting recorded information by detecting change (ΔT) in the absorption of each beam which occurs between recorded and non-recorded portions of the recording medium layer; and
an erasing step for erasing information, which has been recorded by changing the optical characteristics of one or more of said compounds (A), by projecting beams having wavelengths (λ₂ - Fig. 1(e)) corresponding substantially to the respective peaks of the second absorption spectra (II_{A}) of said one or more compounds.

## Patentansprüche

1. Optisches Aufzeichnungsmedium mit einer Aufzeichnungsschicht (2) zum Aufzeichnen von Information durch Anwenden eines Lichtstrahls, wobei das Lichtabsorptionsspektrum von Bereichen der Aufzeichnungsmediumschicht selektiv geändert wird, welche Schicht mindestens zwei organische Verbindungen enthält, die unterschiedliche Sätze photochromatischer Eigenschaften aufweisen, um das Aufzeichnen und Löschen von Information unabhängig voneinander für jede Verbindung zu ermöglichen, **dadurch gekennzeichnet**, daß die organischen Verbindungen in einem optisch durchsichtigen Bindemittel dispergiert sind, und daß die photochromatischen Eigenschaften jeder Verbindung reversibel durch Belichten mit Strahlen mit Wellenlängen änderbar sind, die sich von denjenigen unterscheiden, die in jede beliebige andere der Verbindungen eingespeist wurden, um das Löschen von Information unabhängig voneinander für jede Verbindung zu bewirken.

2. Optisches Aufzeichnungsmedium nach Anspruch 1, bei dem mindestens zwei Arten organischer Verbindungen, wie Hydrazon, Osazon, Stilben, Salicylaldehyd, Spiropyran, Fulgid, Azobenzol und Derivate derselben in dem Bindemittel dispergiert sind.

3. Optisches Aufzeichnungsmedium nach Anspruch 1, bei dem Thioindigo und Pyrenthioindigo in dem Bindemittel dispergiert sind.

4. Optisches Aufzeichnungsmedium nach einem der Ansprüche 1 bis 3, bei dem das Bindemittel aus einem Acrylpolymer oder einem Polyvinylchloridpolymer oder einer anorganischen Verbindung, wie Wasserglas, besteht.

5. Optisches Aufzeichnungsmedium nach einem der Ansprüche 1 bis 4, bei dem sich das Absorptionsspektrum jeder der Verbindungen reversibel bei Belichten mit einem Strahl ändert, der eine Wellenlänge aufweist, die das Absorptionsspektrum einer beliebigen anderen der Verbindungen nicht beeinflußt.

6. Optisches Aufzeichnungsmedium nach einem der Ansprüche 1 bis 5, bei dem sich die Farbe jeder der Verbindungen reversibel beim Belichten mit einem Strahl ändert, der eine Wellenlänge aufweist, die die Farbe einer beliebigen anderen der Verbindungen nicht beeinflußt.

7. Optisches Aufzeichnungsmedium nach einem der vorangehenden Ansprüche, das weiter ein aus Glas oder Kunststoff bestehendes Substrat (1) aufweist, auf dem die Aufzeichnungsmediumsschicht (2) ausgebildet ist.

8. Optisches Aufzeichnungsmedium nach Anspruch 7, bei dem das Substrat (1) so gemustert ist, es ein geometrisches Muster, wie Nuten, auf einer seiner Oberflächen aufweist.

9. Optisches Aufzeichnungsmedium nach Anspruch 7 oder Anspruch 8, das weiter einen Reflexionsfilm aufweist, der auf der entgegengesetzten Oberfläche der Aufzeichnungsmediumsschicht (2) in bezug auf das Substrat (1) ausgebildet ist.

10. Optisches Aufzeichnungsmedium nach einem der Ansprüche 7 bis 9, bei dem die Aufzeichnungsmediumsschicht (2) zwischen Schutzfilmen angeordnet ist.

11. Verfahren zum Aufzeichnen, Lesen und Löschen von Information auf einem optischen Aufzeichnungsmedium mit einer Aufzeichnungsmediumsschicht, in der Information durch Anlegen eines Lichtstrahls aufgezeichnet werden kann, um das Lichtabsorptionsspektrum von Bereichen der Aufzeichnungsmediumsschicht selektiv zu ändern, welche Schicht mindestens zwei photochrome organische Verbindungen (A, B) aufweist, die in einem optisch durchsichtigen Bindemittel dispergiert sind, wobei jede Verbindung optische Eigenschaften (I_{A}, II_{A}; I_{B}, II_{B}) aufweist, die sich bei Belichtung mit Strahlen mit Wellenlängen (λ1, λ2; λ4, λ3) ändern, die sich von denjenigen unterscheiden, die an die andere Verbindung oder Verbindungen angelegt werden, um das Aufzeichnen, Lesen und Löschen von Information unabhängig voneinander für jede Verbindung zu erlauben, wobei die optischen Eigenschaften jeder Verbindung reversibel zwischen denen für ein jeweiliges erstes Absorptionsspektrum (I_{A}, I_{B}) und denjenigen für ein jeweiliges zweites Absorptionsspektrum (II_{A}, II_{B}) änderbar sind, welches Verfahren die folgenden Schritte aufweist:
- einen Initialisierungsschritt, bei dem Strahlen mit Wellenlängen (λ2, λ3) eingestrahlt werden, die im wesentlichen den jeweiligen Signalspitzen des zweiten Absorptionsspektrums (II_{A}, II_{B}) der Komponenten entsprechen, so daß jede Verbindung ihr jeweiliges erstes Absorptionsspektrum (I_{A}, I_{B}) zeigt;
- einen Aufzeichnungsschritt, bei dem Strahlen abhängig von aufzuzeichnender Information mit Wellenlängen (λ1, λ4) eingestrahlt werden, die im wesentlichen den jeweiligen Signalspitzen der ersten Absorptionsspektren (I_{A}, I_{B}) der Verbindungen entsprechen, so daß in den Bereichen der Aufzeichnungsmediumsschicht, die einem oder mehreren der Strahlen ausgesetzt sind, Verbindungen (A - Fig. 1(c); B - Fig. 1(d)), die diesen Strahlen zugeordnet sind, zu ihren jeweiligen zweiten Absorptionsspektren (II_{A}, II_{B}) zurückkehren;
- einen Leseschritt, bei dem Strahlen mit Wellenlängen eingestrahlt werden, die nahe bei denen der beim Aufzeichnungsschritt verwendeten Strahlen liegen und in der Intensität niedriger sind, und bei dem aufgezeichnete Information dadurch entnommen wird, daß die Änderung (ΔT) in der Absorption jedes Strahls erfaßt wird, die zwischen Bereichen mit und ohne Aufzeichnung der Aufzeichnungsmediumsschicht auftritt; und
- einen Löschschritt zum Löschen aufgezeichneter Information durch Ändern der optischen Eigenschaften einer oder mehrerer der Verbindungen (A) durch Einstrahlen von Strahlen mit Wellenlängen (λ2 - Fig. 1(e)), die im wesentlichen den jeweiligen Signalspitzen der zweiten Absorptionsspektren (II_{A}) der einen oder mehreren Verbindungen entsprechen.

## Revendications

1. Support d'enregistrement optique qui comprend une couche (2) de support d'enregistrement dans laquelle des informations peuvent être enregistrées en appliquant un faisceau lumineux de manière à modifier sélectivement le spectre d'absorption de lumière de certaines parties de la couche de support d'enregistrement, ladite couche comprenant au moins deux composés organiques qui présentent des ensembles différents de caractéristiques photochromiques de façon à permettre l'enregistrement et la lecture d'informations indépendamment en ce qui concerne chaque composé, caractérisé en ce que lesdits composés organiques sont dispersés dans un liant optiquement transparent, et en ce que les caractéristiques photochromiques de chaque composé sont aptes à être modifiées de façon réversible lors de l'exposition à des faisceaux présentant des longueurs d'ondes différentes de celles qui sont appliquées à l'un quelconque des autres composés, de manière à permettre d'effacer des informations indépendamment en ce qui concerne chaque composé.

2. Support d'enregistrement optique selon la revendication 1, dans lequel au moins deux types de composés organiques, tels que l'hydrazone, l'osazone, le stilbène, le salicylaldéhyde, le spiropyrane, le fulgide, l'azobenzène et des dérivés de ces composés, sont dispersés dans ledit liant.

3. Support d'enregistrement selon la revendication 1 dans lequel le thioindigo et le pyrène thioindigo sont dispersés dans ledit liant.

4. Support d'enregistrement optique selon l'une quelconque des revendications 1 à 3 dans lequel ledit liant se compose d'un polymère acrylique, d'un polymère poly (chlorure de vinyle) ou d'un composé inorganique tel que le verre soluble.

5. Support d'enregistrement optique selon l'une quelconque des revendications 1 à 4 dans lequel le spectre d'absorption de chacun desdits composés varie de façon réversible lors de l'exposition à un faisceau ayant une longueur d'onde qui n'affecte pas le spectre d'absorption de l'un quelconque des autres dits composés.

6. Support d'enregistrement optique selon l'une quelconque des revendications 1 à 5 dans lequel la couleur de chacun desdits composés varie de façon réversible lors de l'exposition à un faisceau ayant une longueur d'onde qui n'affecte pas la couleur de l'un quelconque des autres dits composés.

7. Support d'enregistrement optique selon l'une quelconque des revendications précédentes comprenant en outre un substrat (1) réalisé en verre ou en matière plastique sur lequel ladite couche (2) de support d'enregistrement est formée.

8. Support d'enregistrement optique selon la revendication 7 dans lequel ledit substrat (1) est doté d'un motif géométrique tel que des rainures sur une de ses surfaces.

9. Support d'enregistrement optique selon la revendication 7 ou la revendication 8, comprenant en outre un film réfléchissant disposé sur la surface opposée de ladite couche (2) de support d'enregistrement par rapport audit substrat (1).

10. Support d'enregistrement optique selon l'une quelconque des revendications 7 à 9, dans lequel la couche (2) de support d'enregistrement est disposée entre des films protecteurs.

11. Procédé d'enregistrement, de lecture et d'effacement d'informations sur un support d'enregistrement optique ayant une couche de support d'enregistrement dans laquelle des informations peuvent être enregistrées en appliquant un faisceau lumineux de manière à modifier sélectivement le spectre d'absorption de lumière de certaines parties de la couche de support d'enregistrement, la couche comprenant au moins deux composés organiques photochromiques (A, B) dispersés dans un liant optiquement transparent, chaque composé présentant des caractéristiques optiques (I_{A}, II_{A}; I_{B}, II_{B}) qui sont aptes à être modifiées lors de l'exposition à des faisceaux ayant des longueurs d'ondes (λ₁, λ₂; λ₄, λ₃) différentes de celles qui sont appliquées à l'autre composé ou aux autres composés, de manière à permettre l'enregistrement, la lecture et l'effacement d'informations indépendamment en ce qui concerne chaque composé, les caractéristiques optiques de chacun desdits composés étant aptes à varier de façon réversible entre celles d'un premier spectre d'absorption respectif (I_{A}, I_{B}) et celles d'un second spectre d'absorption respectif (II_{A}, II_{B}), ledit procédé comprenant les étapes suivantes:
une étape d'initialisation consistant à projeter des faisceaux ayant des longueurs d'ondes (λ₂, λ₃) correspondant sensiblement aux pics respectifs des seconds spectres d'absorption (II_{A}, II_{B}) desdits composés de sorte que chaque composé présente son premier spectre d'absorption respectif (I_{A}, I_{B}):
une étape d'enregistrement consistant à projeter des faisceaux ayant des longueurs d'ondes (λ₁, λ₄) correspondant sensiblement aux pics respectifs des premier spectres d'absorption (I_{A}, I_{B}) desdits composés en fonction des informations à enregistrer, de sorte que, dans certaines parties de la couche de support d'enregistrement exposées à un ou à plusieurs desdits faisceaux, les composés (A - Figure 1(c); B - Figure 1(d)) associés à ces faisceaux retournent à leurs seconds spectres d'absorption respectifs (II_{A}, II_{B});
une étape de lecture consistant à projeter des faisceaux ayant des longueurs d'ondes proches de celles des faisceaux utilisés dans l'étape d'enregistrement, et une intensité inférieure à l'intensité de ceux-ci, et à extraire des informations enregistrées en détectant la modification (ΔT) de l'absorption de chaque faisceau se produisant entre des parties enregistrées et non enregistrées de la couche de support d'enregistrement; et
une étape d'effacement pour effacer des informations qui ont été enregistrées en modifiant les caractéristiques optiques d'un ou de plusieurs desdits composés (A), en projetant des faisceaux ayant des longueurs d'ondes (λ₂ - Figure 1(e)) correspondant sensiblement aux pics respectifs des seconds spectres d'absorption (II_{A}) desdits composés au nombre de un ou plusieurs.
